# EUROPEAN PATENT APPLICATION

(11) **EP 4 645 039 A1**
(43) Date of publication of application: **05.11.2025**
(21) Application number: 24173999.4
(22) Date of filing: 03.05.2024
(51) Int. Cl.: G06F 3/0338, G06F 3/04847, G06F 3/01, G05G 9/047, B63H 25/02, B63H 21/21, G05G 5/03

(54) **FORCE FEEDBACK CONTROL OF A MARINE VESSEL INPUT DEVICE**

(71) Applicant: CPAC Systems AB, 401 23 Göteborg (SE)
(72) Inventor: WALL, David, 412 62 GÖTEBORG (SE); AHLSTEDT, Mikael, 411 32 GÖTEBORG (SE)
(74) Representative: Ström & Gulliksson AB

(57) **Abstract**

A computer system (100; 600) comprising processing circuitry (102; 602) configured to control a force feedback unit (22) to progressively increase a force feedback applied to the input device (20) in response to a manual maneuvering of the input device (20) towards a virtual stop position (VSP) being defined in between an equilibrium position (EP) and a mechanical end position (MEP) of the input device (20), the virtual stop position (VSP) being a software-defined set point acting as an intermediate trigger for the input device (20), wherein the force feedback is progressively increased until it reaches a maximum force feedback at the virtual stop position (VSP); and control the force feedback unit (22) to reduce the force feedback applied to the input device (20) at the virtual stop position (VSP) in response to a force of a manual maneuvering of the input device (20) exceeding the maximum force feedback value.

## Description

### TECHNICAL FIELD

The disclosure generally relates to navigation control in marine vessels. In particular aspects, the disclosure relates to force feedback control of a marine vessel input device. The disclosure can be applied to marine vessels, such as leisure boats, ships, cruise ships, fishing vessels, yachts, ferries, among other vehicle types. Although the disclosure may be described with respect to a particular marine vessel, the disclosure is not restricted to any particular marine vessel.

### BACKGROUND

Marine vessel operation often requires precise control, yet traditional force feedback mechanisms in control systems can be limited in providing the nuanced response needed for complex maneuvers. The lack of intuitive and adaptive feedback can lead to operator fatigue and increased risk of navigational errors, highlighting a clear need for an improved approach to force feedback control that enhances safety and efficiency in maritime navigation.

It is in view these realizations and others that the present inventors are herein suggesting one or more improvements to the prior art of force feedback control for marine vessel input devices.

### SUMMARY

The present inventors have recognized that providing operators with more refined feedback could improve maneuverability and safety. This has led to the designing of a force feedback system that offers a graduated response to the operator's inputs, enhancing control and reducing the likelihood of input errors. The system gives operators a better sense of when they are approaching the limits of the control system without relying on hard physical stops, which could be jarring and less informative. Moreover, the system is not only capable of guiding the operator through feedback that progressively reflects the position of the control, but also of recognizing when an operator deliberately intends to exceed the normal operating range, allowing for an override mechanism that respects the operator's judgment in critical situations.

In a first aspect of the disclosure there is accordingly provided a computer system for force feedback control of an input device of a marine vessel, the computer system comprising processing circuitry configured to: control a force feedback unit to progressively increase a force feedback applied to the input device in response to a manual maneuvering of the input device towards a virtual stop position, the virtual stop position being defined in between an equilibrium position and a mechanical end position of a movable range of the input device, wherein the virtual stop position is a software-defined set point acting as an intermediate trigger for the input device, wherein the force feedback is controlled to be progressively increased until it reaches a maximum force feedback value upon said input device being positioned at the virtual stop position; and control the force feedback unit to reduce the force feedback applied to the input device at the virtual stop position in response to a force of a manual maneuvering of the input device exceeding the maximum force feedback value.

The first aspect of the disclosure may seek to improve the force feedback provided to an operator maneuvering a marine vessel. A technical benefit may involve a reduced operator fatigue, an increased precision in control inputs, and a more collaborative interaction between the operator and the control system, resulting in smoother and safer vessel operation.

Optionally in some examples, including in at least one preferred example, the movable range of the input device comprises a plurality of virtual stop positions, wherein the force feedback is controlled to be progressively increased until it reaches a maximum force feedback value upon said input device being positioned at either one of the plurality of virtual stop positions, and wherein the force feedback is controlled to be reduced at said either one of the plurality of virtual stop positions in response to a force of a manual maneuvering exceeding a maximum force feedback value. A technical advantage may include providing operators with tiered tactile feedback for more precise control as they navigate through different stages of input device movement.

Optionally in some examples, including in at least one preferred example, the processing circuitry is configured to set the maximum force feedback value differently for each one of the plurality of virtual stop positions, wherein maximum force feedback values for virtual stop positions closer to the mechanical end position are set higher than virtual stop positions closer to the equilibrium position. A technical advantage may include allowing for a customized force feedback experience that becomes progressively more pronounced as the operator approaches the limits of the control system, enhancing the operator's situational awareness.

Optionally in some examples, including in at least one preferred example, the processing circuitry is configured to set the maximum force feedback value approximately at the same value for each one of the plurality of virtual stop positions. A technical advantage may include a consistent force feedback response at different positions within the input device's range of motion.

Optionally in some examples, including in at least one preferred example, the progressive increase of the force feedback comprises a linear function in relation to a displacement of the input device with respect to a virtual stop position. A technical advantage may include a predictable and proportional increase in feedback, which can help operators intuitively gauge the amount of force they are applying.

Optionally in some examples, including in at least one preferred example, the progressive increase of the force feedback comprises an exponential function configured to exponentially increase the closer the input device has been moved towards a virtual stop position. A technical advantage may include a heightened sense of feedback as the operator moves closer to the control limits, potentially preventing overshooting and aiding in fine maneuvering.

Optionally in some examples, including in at least one preferred example, the processing circuitry is configured to set a virtual stop position as an angular or distance offset in relation to an angle or position of the mechanical end position or the equilibrium position. A technical advantage may include the ability to define precise control boundaries within the system, which can be adjusted for different operational scenarios or according to the vessel's specific handling characteristics.

Optionally in some examples, including in at least one preferred example, the processing circuitry is configured to set a maximum force feedback value based on one or more of ambient operating conditions, input device characteristics, vessel characteristics, operational modes, vessel operating conditions, operator preferences, surroundings data, IMU data, and safety and regulatory data. A technical advantage may include the adaptive calibration of force feedback to real-time conditions, ensuring improved control and safety under varying circumstances.

Optionally in some examples, including in at least one preferred example, the processing circuitry is configured to cause emission of an audible alert and/or cause display of a visual indicator on a display unit of the marine vessel in response to a force of a manual maneuvering exceeding a maximum force feedback value. A technical advantage may include providing operators with additional sensory cues to alert them when they have exceeded the programmed force feedback threshold, enhancing reaction times and situational awareness.

Optionally in some examples, including in at least one preferred example, the processing circuitry is configured to control a force attenuation unit to apply an attenuation force to the input device in response to a force of a manual maneuvering of the input device exceeding a maximum force feedback value. A technical advantage may include the smoothing of control inputs immediately after an override, reducing the risk of abrupt movements that could compromise vessel stability or navigational accuracy.

Optionally in some examples, including in at least one preferred example, the input device comprises respective movable ranges in three degrees of freedom, wherein one or more virtual stop positions are defined in each one of the respective movable ranges of the three degrees of freedom. A technical advantage may include a comprehensive control system that provides nuanced feedback across multiple axes of movement, offering a more realistic and responsive piloting experience.

In a second aspect of the disclosure there is provided a marine vessel comprising the computer system of the first aspect.

The second aspect of the disclosure may seek to integrate advanced force feedback control within marine vessel operations, enhancing the operator's ability to precisely maneuver the vessel by providing a tactile indication of the input device's position and allowing for manual override of the system-imposed limits for finer control adjustments. A technical benefit may include the provision of a marine vessel with a navigation interface that increases the granularity of control feedback, thereby improving operator engagement and vessel responsiveness, and potentially reducing the cognitive load and physical demands on the operator during critical navigational tasks.

In a third aspect of the disclosure there is provided a computer-implemented method for force feedback control of an input device of a marine vessel, comprising: controlling, by processing circuitry of a computer system, a force feedback unit to progressively increase a force feedback applied to the input device in response to a manual maneuvering of the input device towards a virtual stop position, the virtual stop position being defined in between an equilibrium position and a mechanical end position of a movable range of the input device, wherein the virtual stop position is a software-defined set point acting as an intermediate trigger for the input device, wherein the force feedback is controlled to be progressively increased until it reaches a maximum force feedback value upon said input device being positioned at the virtual stop position; and controlling, by the processing circuitry, the force feedback unit to reduce the force feedback applied to the input device at the virtual stop position in response to a force of a manual maneuvering of the input device exceeding the maximum force feedback value.

The third aspect of the disclosure may seek to streamline the operation of marine vessels by utilizing a computer-implemented method to provide operators with a progressive force feedback system, which enhances precision in steering and handling by clearly indicating the position of the input device relative to set control parameters and allowing for necessary manual override by the operator. A technical benefit may include a methodical application of force feedback that can be systematically adjusted for various operational scenarios, offering a tailored control experience that improves the operator's situational awareness and decision-making capabilities, while also accommodating for emergency maneuvers through an intuitive override mechanism.

In a fourth aspect of the disclosure there is provided a computer program product comprising program code for performing, when executed by processing circuitry, the method of the third aspect. The first aspect of the disclosure may seek to facilitate the implementation of the advanced force feedback control method from the third aspect by providing a computer program product, which, when executed, enables the precise and dynamic control of a marine vessel's input device through software. A technical benefit may include the ease of deploying the force feedback control method across various marine vessels, such as contemporary or legacy vessels, by installing the computer program product, thus standardizing the enhanced control system and ensuring that operators can benefit from improved maneuverability and safety regardless of the specific hardware configuration of the vessel's control systems.

In a fifth aspect of the disclosure there is provided a non-transitory computer-readable storage medium comprising instructions, which when executed by processing circuitry, cause the processing circuitry to perform the method of the third aspect.

The fifth aspect of the disclosure may seek to provide a durable and reliable medium for storing the instructions necessary to execute the computer-implemented method for enhanced force feedback control in marine vessel navigation, as outlined in the third aspect. A technical benefit may include the ability to consistently reproduce the advanced force feedback control functionality across different marine vessels, such as contemporary or legacy vessels, by using a non-transitory computer-readable storage medium, ensuring that the improved performance and safety features are readily available and maintain their integrity over time without being dependent on e.g. a continual power supply or internet connectivity.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of a marine vessel.
**FIG. 2** is a schematic illustration of an exemplary input device in a movable range involving an equilibrium position, a virtual stop position, and a mechanical end position.
**FIG. 3** is a schematic illustration of an exemplary input device in a movable range involving an equilibrium position, three virtual stop positions, and a mechanical end position.
**FIG. 4A** is a schematic illustration of an exemplary force feedback control, with an accompanying subplot depicting force feedback as a function of angular offset, for an input device in an equilibrium position.
**FIG. 4B** is a schematic illustration of an exemplary force feedback control, with an accompanying subplot depicting force feedback as a function of angular offset, for an input device in a position between an equilibrium position and a virtual stop position.
**FIG. 4C** is a schematic illustration of an exemplary force feedback control, with an accompanying subplot depicting force feedback as a function of angular offset, for an input device in a virtual stop position.
**FIG. 4D** is a schematic illustration of an exemplary force feedback control, with an accompanying subplot depicting force feedback as a function of angular offset, for an input device having overridden a virtual stop position.
**FIG. 5** is a flowchart of an exemplary method for force feedback control of an input device.
**FIG. 6** is a schematic diagram of an exemplary computer system for implementing examples disclosed herein.

### DETAILED DESCRIPTION

The detailed description set forth below provides information and examples of the disclosed technology with sufficient detail to enable those skilled in the art to practice the disclosure.

The present disclosure suggests a force feedback control approach that offers a delicate balance between providing useful tactile feedback and allowing for the operator's intentional override when necessary. By progressively increasing the force feedback as the input device moves towards a virtual stop position, the system offers nuanced control that becomes more resistant as one approaches the software-defined limit. This progressive increase in feedback allows operators to feel the gradual resistance, which can help them understand how close they are to reaching a critical point in the input device's range without the need for visual confirmation. The tactility of the feedback offers operators a more intuitive interaction with the control system, allowing them to maintain their focus on the broader task of vessel navigation. The virtual stop position simulates physical boundaries within a virtual context. By defining a virtual stop position, an accurate representation of the sensation that would be felt if there were a physical stop can be envisaged, without actually requiring any mechanical components limiting the input device's movement. Reaching a maximum force feedback value at the virtual stop position provides a clear indication to the operator that they have reached a certain limit within the system's operational range. This maximum force feedback value represents a limit that, under typical operating conditions, should preferably not be exceeded. It serves as a safeguard against excessive inputs that could lead to oversteering or other forms of navigational error. However, the system's ability to allow for an override thereof when the manually applied force exceeds the maximum feedback value may be equally important. In certain situations, such as emergency maneuvers or unexpected navigational challenges, the operator may need to exert additional force beyond the normal operating range. The capacity to recognize and respond to this deliberate input by reducing the feedback allows the operator to retain control over the vessel. This feature respects the operator's judgment and recognizes that no automated system can fully replace human expertise and decision making.

Overall, this approach to force feedback control provides a safer, more responsive, and more intuitive control system for marine vessels. It enhances operator confidence and precision, reduces the likelihood of control errors, and accommodates the need for human override in certain, possibly exceptional, circumstances. Ultimately, improvements over traditional force feedback mechanisms are offered.

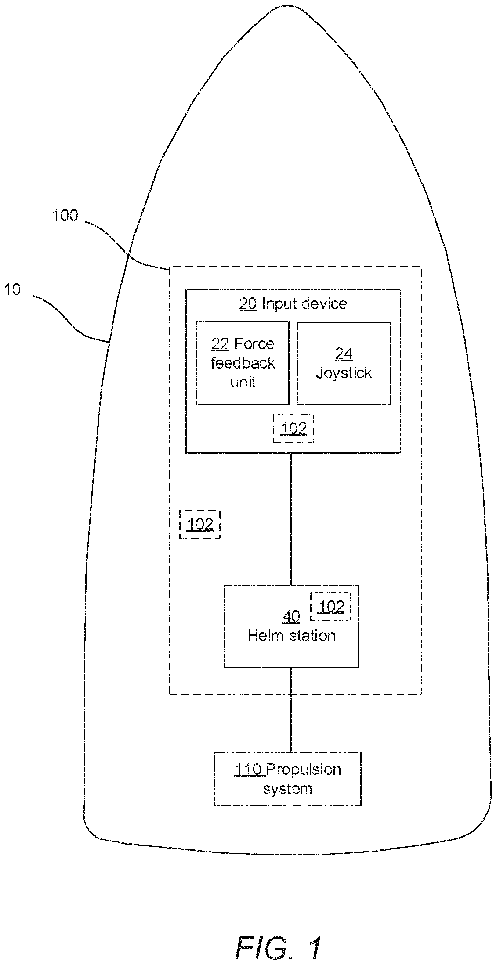

**FIG. 1** is schematic illustration of a marine vessel **10** in which some of the inventive concepts of the present disclosure may be applied. In non-limiting examples, the marine vessel **10** is a leisure boat, ship, cruise ship, fishing vessel, yacht, ferry, or the like. The marine vessel **10** is adapted to operate at bodies of water, e.g., a sea, ocean, lake, river, bay, gulf, strait, channel, reservoir, fjord, marsh, swamp, etc. The marine vessel **10** is propelled by a propulsion system **110,** which may be one configured for an electric marine vessel, gasoline-powered marine vessel, diesel-powered marine vessel, a hybrid thereof, or the like, provided it can be controlled based on computer control via input signals from an input device having a joystick or other type of maneuverable member such as a handle.

The marine vessel **10** comprises a computer system **100,** which is a marine control system being adapted to control operations of the marine vessel **10.** The computer system **100** comprises processing circuitry **102** configured to manage force feedback-related features as will be explained herein. That is, the processing circuitry **102** is configured to control a force feedback unit **22** operating in conjunction with a movable member, such as a handle or other movable member of an input device **20.** In the present disclosure this handle or other movable member will hereinafter be referred to as a joystick **24,** but it shall be understood that the joystick **24** is merely an exemplary movable member that forms part of the input device **20** and that is maneuverable between positions by an operator. The force feedback is controlled based on the position of the joystick **24.** Control signals of the computer system **100** are routed through a helm station **40,** and the processing circuitry **102** may thus form part of and/or be provided in either one of the input device **20,** the computer system **100** or the helm station **40.**

The marine vessel **10** comprises the input device **20.** The input device **20** comprises the force feedback unit **22** and the joystick **24.** The input device **20** shall be understood as a device that can be adapted to provide navigational commands to the computer system **100,** such as commands pertaining to a speed or direction. The processing circuitry **102** is thus configured to receive signals from the input device **20** for e.g. control of the propulsion system **110,** and send signals for control of the force feedback unit **22.**

The force feedback unit **22** is adapted to apply a force feedback to the joystick **24.** The force feedback may be applied in the form of haptic feedback, which corresponds to physical sensations or forces to a user in response to their interactions with the joystick **24.** The force feedback unit **22** is thus adapted to provide force feedback in response to the operator of the marine vessel **10** maneuvering the joystick **24** between various positions, such as virtual stop positions, mechanical end positions and an equilibrium position. These positions will be described in more detail later on in this disclosure.

The force feedback may be applied by adjusting a movement resistance of the joystick **24.** The force feedback unit **22** may be a mechanical device and/or an electrical device. In non-limiting examples, the force feedback unit **22** may comprise an electric motor, an actuator, a piezoelectric device, a hydraulic device, a pneumatic device, a shape memory alloy, an electromagnetic device, a mechanical linkage, or the like. In examples where the joystick **24** is movable in three degrees of freedom, the force feedback unit **22** may comprise a respective force feedback unit for each degree of freedom. It is therefore possible to target force feedback application to selective portions of the joystick **24** (e.g. through one or more of the force feedback units). The force feedback unit **22** may be integrated into the joystick **24,** or be provided externally to the joystick **24** but configured to transmit the force feedback through connection with the joystick **24.** For external use, the force feedback unit **22** may involve an external controller that is configured to transmit signals to a controller of the joystick **24** such that force feedback can be generated therein.

The resistance of movements of the joystick **24** may be adjusted by a fixed force value or a variable force value. For example, consider the scenario where a navigation request involving a speed value of 10000 is requested. By applying a fixed force value, this would mean that the value of 10000 be immediately reduced to a lower specific value, such as 8000. For a variable force value, the speed value of 10000 can instead be gradually reduced from 10000 to 8000, for example via intermediary values of 9500, 9000, 8500, or generally at any arbitrary subinterval with a granularity appropriate for the current driving situation. The variable force value may be an integrated value over time, for example functioning as a proportional-integral-derivative (PID) controller. To this end, the magnitude and direction of the force value may vary or not depending on the type of force value being applied. Gradually reducing the speed value is synonymous with progressively increasing the force feedback because, in force feedback systems, resistance is used to modulate the operator's input, thereby inversely controlling the rate of change. More resistance thus leads to slower and more controlled input changes.

In order to provide the force feedback, the direction of the force value is typically opposite from the movement direction of the joystick **24,** or the upcoming movement direction that is associated with a navigational request. For instance, movements by the joystick **24** from the equilibrium position towards a mechanical end position may involve an applied force value in a direction from the mechanical end position towards said the equilibrium position. Since the force value may vary, the force value may cause different movement speeds of the joystick **24** from the equilibrium position to the mechanical end position. The force value may completely counteract the movement of the joystick **24,** thereby locking the joystick **24** in place. The force value may also be sufficiently small such that movement of the joystick **24** is allowed. This may be done at varying magnitudes such that the movement speed of the joystick **24** varies.

The joystick **24** is a handle, a lever, or some type of maneuverable axle. The joystick **24** may be arranged to be maneuvered by an operator of the marine vessel **10,** for example by a hand of the operator. The joystick **24** may be movable in three degrees of freedom, i.e., pitch, roll and yaw. The pitch movement refers to up-and-down movement or rotation of the joystick **24** around a horizontal axis, i.e., around the transverse axis which is an imaginary line running from port (left) to starboard (right) across the width of the marine vessel **10.** The roll movement refers to side-to-side movement or rotation of the joystick **24** around a longitudinal axis which is an imaginary line running from the bow (front) to the stem (back) of the marine vessel **10.** The yaw movement refers to left-and-right movement or rotation of the joystick **24** around a vertical axis, and corresponds to a turning or twisting motion of the marine vessel **10** by a change of direction or heading. These three degrees of freedom allow the joystick **24** to control motion and orientation of the marine vessel **10** in three-dimensional space.

The joystick **24** is movable between positions that herein are referred to as an equilibrium position and a mechanical end position (as mentioned above). The equilibrium position shall be understood as a neutral or default position which the joystick **24** is assuming upon no external forces are exerted on the joystick **24.** In some examples, the external forces are user-applied forces. In these examples, it is therefore understood that no user-applied force exertion on the joystick **24** causes the joystick **24** to be maintained at the equilibrium position. This is unless some other movement resistance is being applied to the input device **20,** for instance by the force feedback unit **22.** The equilibrium position is typically a centered position of the joystick **24** in relation to its mechanical end positions defined by physical limitations of the joystick **24.** However, other joystick designs may involve other positional details of equilibrium positions.

Different joystick configuration may involve various number of mechanical end positions. In a simple example the joystick **24** involves an equilibrium position and one mechanical end position representing fully relaxed and fully forward-maneuvered states, respectively. Other joystick configurations may however be constructed differently, and no limitations shall be put in this regard. The mechanical end position(s) are defined by physical limitations of the joystick **24.**

Between the equilibrium position and the mechanical end position, one or more virtual stop positions are defined. Virtual stop position(s) may be defined in one or more of the movable ranges in the three degrees of freedom of the joystick **24.** In the context of the present disclosure, a virtual stop position refers to a non-physical, software-implemented point, acting as an intermediate trigger for the input device within the operational range (i.e., between the equilibrium position and a mechanical end position) of the input device **20,** more specifically of the joystick **24.** The intermediate trigger is a programmatically defined mechanism that automatically initiates a specific action or process based on predetermined conditions or criteria. In this case the trigger corresponds to position in movable range where a maximum force feedback value is applied to the joystick **24.** The "specific action or process" is thus an exerted maximum force feedback value, and the "condition or criteria" is a position of the joystick **24.** A virtual stop position is designed to interact with the force feedback unit **22.** Unlike a physical stop which is a tangible part of the hardware, a virtual stop position is created and managed by the processing circuitry **102.** It is a programmable point that can be adjusted as needed by the processing circuitry **102,** either automatically or manually, such as by an operator or helmsman of the marine vessel **10.**

The virtual stop position(s) may be defined anywhere between the equilibrium position and a mechanical end position, such as exactly in between (e.g. at 50% of the movable range), along a first portion (e.g. in the first 50% of the movable range), or along a second portion (e.g. in the second and thus last 50% of the movable range).

As the joystick **24** is maneuvered towards a virtual stop position, the processing circuitry **102** is configured to progressively increase the force feedback by control via the force feedback unit **22.** This means that as the joystick **24** is approaching the virtual stop position, the resistance felt by the operator gradually increases, providing a form of tactile communication about the joystick's **24** position relative to the virtual stop position. Upon reaching the virtual stop position, the force feedback reaches a maximum force feedback value. This maximum force feedback value represents the point at which the processing circuitry **102** has fully communicated the location of and thus the arrival to the virtual stop position to the operator through the force feedback provided by the force feedback unit **22.** The maximum force feedback value may be set by the processing circuitry **102.**

The maximum force feedback value may be depend on a variety of different factors pertaining to the marine vessel **10** or the environment where it is operating. By taking these factors into account, the maximum force feedback value may be adapted to improve performance, safety, and operator comfort under varying conditions.

The maximum force feedback value may be based on ambient operating conditions. Ambient operating conditions can include wave height, wind speed/direction, current speed/direction, or the like. Rough sea conditions might require higher force feedback to ensure the operator maintains control, and the strength and direction of water currents could impact the required force feedback for maintaining a steady course.

The maximum force feedback value may be based on input device characteristics. Input device characteristics can include a size of the input device because larger input devices might require higher maximum force feedback due to the increased physical leverage. It can also include type of the input device as different joystick types might have distinct force feedback settings due to ergonomic and operational differences. It can also include a sensitivity factor since devices with higher sensitivity may need finer adjustments in force feedback to prevent overcorrection.

The maximum force feedback value may be based on vessel characteristics. Vessel characteristics can include displacement and mass, as larger vessels may need higher force feedback due to the greater inertia. It may include hull design because the shape and hydrodynamics of the vessel's hull can affect the ease of maneuvering (such as if the vessel is a hydrofoiling vessel), thus influencing force feedback settings. It may also depend on the propulsion system as the type and responsiveness thereof (e.g., conventional propellers, jet drives, pod drives) can impact the required force feedback.

The maximum force feedback value may be based on operational modes. An operational mode may be docking or undocking modes as precision maneuvers like docking might require fine-tuned force feedback for better control. It may also be high-speed navigation modes, as the vessel at high speeds can necessitate a different maximum force feedback to maintain stability and responsiveness. It may also be a search and rescue operation mode, as delicate operations may necessitate adjustments in force feedback to ensure gentle maneuvers.

The maximum force feedback value may be based on vessel operating conditions, such as relating to speed or mechanical conditions.

The maximum force feedback value may be based on operator preferences. For example, novice operators might benefit from higher force feedback to guide their inputs, while experienced operators might prefer lower feedback for more nuanced control. The force feedback can be adjusted based on the duration of the operator's shift to compensate for fatigue. The operator preferences could involve individual force feedback settings.

The maximum force feedback value may be based on surroundings data obtained from a sensing device, such as lidar, radar, or the like. For example, the maximum force feedback may be based on a distance to a nearby object as determined by the surroundings data.

The maximum force feedback value may be based on IMU (inertial measurement unit) data, including gyro data, accelerometer data, GPS data, navigation data, or the like. The feedback from these sensors could inform adjustments to force feedback in real-time to maintain stability, and could influence force feedback settings to adapt to expected conditions.

The maximum force feedback value may be based on safety and regulatory data. This may relate to man overboard situations, where the maximum force feedback value might be reduced to allow quick and sudden maneuvers. It may also relate to equipment malfunction details so that if e.g. a sensor detects a malfunction, the maximum force feedback value could be limited to prevent further damage or loss of control. This may also relate to compliance with maritime laws, and various regulations may specify force feedback limits to ensure safe operation within certain waters or conditions.

If the operator continues to apply manual force to the joystick **24** beyond the maximum force feedback value, i.e., exerting more manual force than what the maximum force feedback value can realize, the processing circuitry **102** is configured to recognize this deliberate action. The processing circuitry **102** is configured to recognize this action as a manual override, and thus control the force feedback unit **22** to reduce the force feedback being applied to the joystick **24.** This functionality allows the operator to move the joystick **24** past the virtual stop position where it is deemed necessary, such as in emergency situations or when a more aggressive maneuver is required.

The manual override may be complemented by one or more additional alerts provided to the user.

In some examples, when the manual override of the maximum force feedback value is detected, an audible alert can be emitted. This may be a clicking sound, an error sound, or any other sound adapted to catch additional attention of the operator. The may be done by control of a speaker device or the like.

In some examples, a display of a visual indicator can be caused. This may be caused on a display unit, such as a screen or a LED of the marine vessel **10.**

The manual override may in some examples be complemented by an attenuation force being applied to the joystick **24.** This may be done through control of a separate attenuation unit, or via the force feedback unit **22.** The attenuation force is applied in the same direction as the force feedback, effectively reducing the net force experienced by the operator. The purpose of this attenuation force is to ensure that after the override, the movement of the joystick is not excessively abrupt or uncontrollable. This may smooth out the movement of the joystick **24** immediately following the override, which can prevent sudden and potentially dangerous maneuvers that could occur if the joystick **24** were allowed to move freely after surpassing the maximum force feedback value.

The attenuation force may be controlled to be relatively higher the closer the mechanical end position **MEP** the joystick **24** is positioned. This may be advantageous as there may be greater implications the closer to the mechanical end position **MEP** the joystick **24** is, due to for example higher operating speeds. A higher attenuation force is thus typically desired. This may prevent wear on the mechanical components of the input device **20** as it can avoid physical forcing of the joystick **24** into its mechanical end position **MEP.**

In general, the virtual stop position serves to enhance control and safety by providing a tactile cue for the operator or helmsman of the marine vessel **10,** informing them of how far they can maneuver the joystick **24** before reaching a critical point, without the need for constant visual monitoring. Overall, the virtual stop position is a sophisticated feature of the marine control system of the marine vessel **10** that provides a nuanced, controllable, and programmable approach of delivering force feedback to the operator. This enhances human-machine interactions improves the safety and effectiveness of vessel navigation.

The progressive increase of the force feedback may comprise a plurality of step-wise increments applied at predefined positions of the joystick **24** in relation to a virtual stop position. This may be seen as a structured and intuitive approach that may be easy to use so that the operator understands and gauges the amount of applied force.

The progressive increase of the force feedback may comprise a linear function in relation to a displacement of the joystick **24** with respect to a virtual stop position. This may provide a predictable and proportional tactile response.

The progressive increase of the force feedback may comprise an integral function over time for which the joystick **24** has been moved towards a virtual stop position. A force may thus be accumulated over time, thereby notifying the operator of how long time the movement has taken.

The progressive increase of the force feedback may comprise an exponential function configured to exponentially increase the closer the joystick **24** has been moved towards a virtual stop position. This may impart a sense of urgency as the virtual stop position is neared.

The progressive increase of the force feedback may comprise a sigmoidal function. In this example a first portion, such as 25%, of a movement range (not the whole range but the range between an origin location, such as the equilibrium position or a virtual stop position, and a next virtual stop position) of the joystick **24** towards a virtual stop position involves a relatively higher force feedback. A second portion, such as the next 50%, of the movement range following the first portion involves a relatively lower force feedback compared to the force feedback in the first portion. A third portion, such as the next and thus last 25%, of the movement range following the second portion involves a relatively higher force feedback compared to the force feedback in the second portion. The force feedback of the first and third portions may be generally the same. This exemplary progressive increase provides a slow start and finish with a more rapid increase in the middle portion of the movable range, which can accentuate the leaving of a virtual stop position and the approaching of either one of a second virtual stop position or the mechanical end position.

Although not explicitly shown in **FIG. 1****,** the skilled person will appreciate that the marine vessel **10** may include additional (sub)systems typically found in marine vessels, such as electrical systems, navigational systems, ballast systems, steering systems, HVAC systems, infotainment systems, hydraulic systems, safety systems, communication systems, auxiliary sensory systems, and so forth.

Although not explicitly shown, it shall be assumed that the various lines in **FIG. 1** refers to various interfaces or peripherals in which the components communicate with one another. For these purposes, any wired or wireless communication standards known in the art may be employed. Wireless communication standards may include IEEE 802.11, IEEE 802.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, or any other form of proximity-based device-to-device radio communication signal such as LTE Direct. Wired communication standards may include Controller Area Network (CAN), Ethernet, Hybrid Communication Unit (HCU), Gigabit Multimedia Serial Link (GMSL), Local Interconnect Network (LIN), FlexRay, Media Oriented Systems Transport (MOST), Universal Serial Bus (USB). The choice of communication standard may depend on data transfer requirements, real-time capabilities, and specific needs of the various components. It shall be appreciated that the scope of the present disclosure is by no means limited to a particular communication standard.

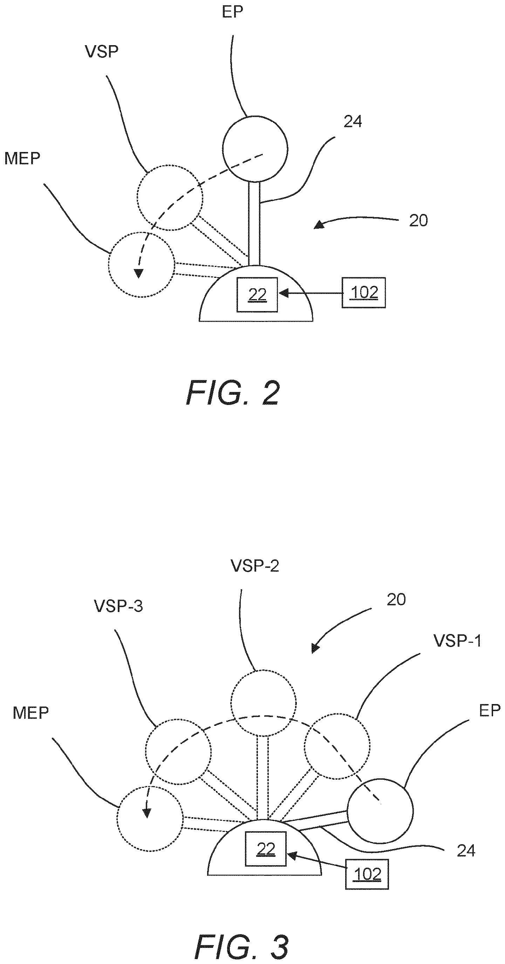

**FIG. 2** shows an exemplary input device **20** involving a joystick **24** in a movable range involving an equilibrium position **EP,** a virtual stop position **VSP,** and a mechanical end position **MEP.** The processing circuitry **102** is configured to cause control of the force feedback unit **22** to apply force feedback to the joystick **24.**

The joystick **24** is currently in its equilibrium position **EP** as depicted by the uniformly drawn lines. The marine vessel **10** in which the joystick **24** is arranged is therefore currently not being given any command to alter its course or speed. The dashed lines of the joystick **24** and the directional arrow indicate the potential movement of the joystick from the equilibrium position **EP** to the mechanical end position **MEP.** The virtual stop position **VSP** is passed along this potential movement in between the equilibrium position **EP** and the mechanical end position **MEP.** As the joystick **24** is moved from the equilibrium position **EP** towards the mechanical end position **MEP,** the processing circuitry **102** is configured to progressively increase the force feedback via the force feedback unit **22** as the joystick **24** approaches the virtual stop position **VSP.** As discussed herein, this increasing resistance informs the operator that they are nearing the virtual stop position **VSP,** which acts as a predefined threshold before reaching the mechanical end position **MEP.** Should the operator need to exceed the limit defined by the virtual stop position **VSP,** they can apply additional force to the joystick **24** to push past the virtual stop position **VSP.** The processing circuitry **102** is configured to recognize this excess force and reduce or alter the force feedback accordingly, thereby allowing the joystick **24** to move beyond the virtual stop position **VSP** towards the mechanical end position **MEP** as required by the navigational demands.

**FIG. 3** shows an exemplary input device **20** involving a joystick **24** in a movable range involving an equilibrium position **EP,** three virtual stop positions **VSP-1, VSP-2, VSP-3,** and a mechanical end position **MEP.** The equilibrium position **EP** may be a mechanical end position. The processing circuitry **102** is configured to cause control of the force feedback unit **22** to apply force feedback to the joystick **24.** In other examples, any number of virtual stop positions can be realized depending on joystick configurations, type of vessel, operating characteristics, or the like. Hence, a more advanced configuration of an input device **20** is provided, incorporating multiple virtual stop positions that builds upon the concept depicted in **FIG. 2** but introduces additional complexity and functionality for a potential improved control.

In this configuration, the equilibrium position **EP** of the joystick **24** is no longer at a plane that is generally perpendicular with the marine vessel's **10** transversal plane, but is located at one end of the movable range of the joystick **24,** effectively serving as a mechanical end position **MEP.** This means that the joystick **24** has a range of motion that extends from this equilibrium position **EP,** which is also a mechanical end position, to another mechanical end position **MEP** at the opposite end of its travel.

As the joystick **24** moves away from the equilibrium position **EP** towards the opposite mechanical end position **MEP,** the force feedback unit **22** controlled by the processing circuitry **102** is configured to progressively increase the force feedback as it approaches each one of the virtual stop positions **VSP-1, VSP-2, VSP-3.** When the operator exerts enough force to override the feedback at the first virtual stop position **VSP-1,** the force feedback "restarts" at a lower level, allowing for a new progressive increase in force feedback as the joystick continues towards the second virtual stop position **VSP-2.** This restart mechanism also applies when moving past the second virtual stop position **VSP-2** towards the third virtual stop position **VSP-3.** Each override and restart allows the operator to experience a new level of force feedback, possibly providing nuanced control and tactile information about the position of the joystick **24** within its range of motion. This may be useful when performing precise or complex maneuvers or fine adjustments with smaller ranges of motion. Moreover, different feedback profiles may be created for different operational contexts or operator preferences, allowing for a graduated response that can guide the operator through different stages of control.

In some examples, the maximum force feedback value may be set differently for each one of the virtual stop positions **VSP-1, VSP-2, VSP-3,** where maximum force feedback values for virtual stop positions closer to the mechanical end position **MEP** are set higher than virtual stop positions closer to the equilibrium position **EP.** In these examples, the virtual stop position **VSP-3** would thus be set higher compared to the virtual stop position **VSP-2,** which in turn would be set higher compared to the virtual stop position **VSP-3.** This may create a gradient of tactile sensations that can inform the operator about their progress along the joystick's **24** movement path.

In other examples, the maximum force feedback value may be set at approximately the same value for each one of the virtual stop positions **VSP-1, VSP-2, VSP-3.** In these other examples, a uniform maximum force feedback value across all virtual stop positions may simplify the control feedback system, providing consistent resistance at each programmed stop. This approach may be beneficial in situations where the operator benefits from a predictable and steady increase in resistance, without the need to adjust to varying levels of force feedback as they maneuver the joystick.

In yet other examples, the maximum force feedback value may be the same for some virtual stop positions **VSP-1, VSP-2, VSP-3,** and different for other. For example, the maximum force feedback value may be a first value for the first virtual stop position **VSP-1,** and a second value for both of the second and third virtual stop positions **VSP-2, VSP-3.**

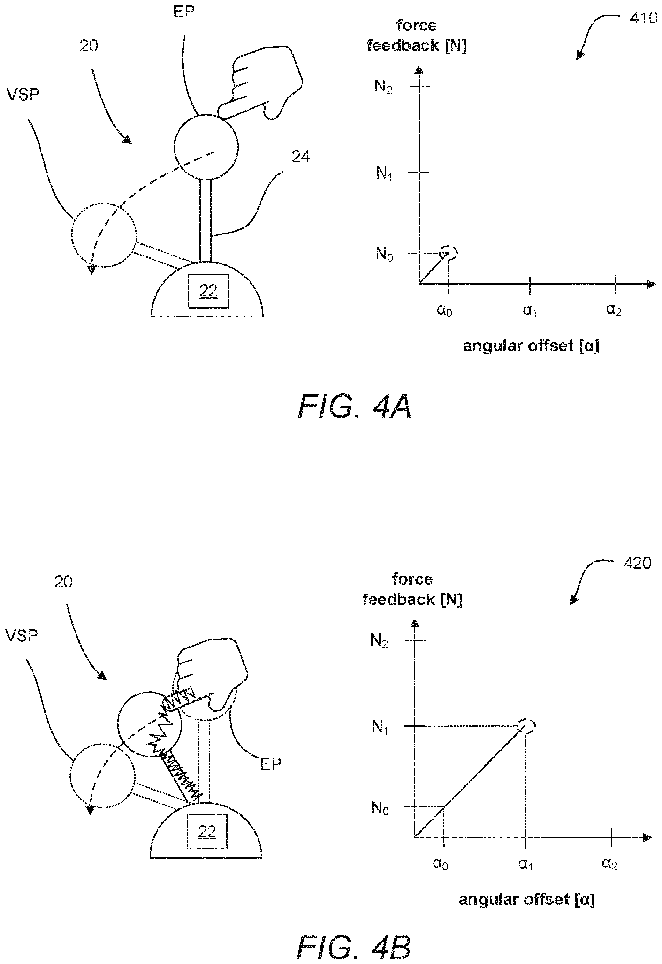

FIGs. 4A-D are schematic illustrations of exemplary force feedback control for a joystick **24** of an input device **20** with a force feedback unit **22.** Each one of the illustrations in FIGs. 4A-D are accompanied by respective subplots **410, 420, 430, 440** which depict force feedback [N] as a function of angular offset [α]. For example, the joystick **24** of FIGs. 4A-D may be similar to the joystick **24** shown and explained with reference to **FIG. 2****,** and may thus demonstrate how force feedback varies with the angular offset of the joystick **24** in relation to its equilibrium position **EP.** While angular offset is exemplified herein, it shall be understood that a virtual stop position may be defined using other practices, such as a distance offset from the equilibrium position **EP** or the mechanical end position **MEP.**

The joystick **24** may comprise a positional sensor (not shown) being configured to retrieve measurements of positional data of the joystick **24.** Based on this data, the angular or distance offset can be determined. This information is thus used to determine whether the joystick **24** is in a the equilibrium position **EP,** a virtual stop position **VSP,** or a mechanical end position **MEP.** The positional sensor may be a potentiometer, hall effect sensor, optical encoder, capacitive sensor, resistive film sensor, magnetic sensor, and the like. The force feedback control may be based on the positional data.

**FIG. 4A** illustrates the joystick **24** in its equilibrium position **EP,** which is the neutral state where no force is being applied by the operator, and the joystick **24** is exerting zero or at least not any, by the operator, realizable force feedback. The angular offset is at zero, indicating no deviation from the equilibrium position **EP.** The subplot **410** confirms this by showing a force feedback of *N₀* at the angular offset *α₀.*

**FIG. 4B** shows the joystick **24** as it has been moved by the operator towards the virtual stop position **VSP.** The subplot **420** reflects an increase in the angular offset to *α₁* and a corresponding increase in force feedback to *N₁.* This indicates that, as the joystick **24** is moved away from the equilibrium position **EP** towards the virtual stop position **VSP,** the operator begins to feel a growing resistance, which is the control system's way of providing tactile feedback about the movement of the joystick **24.**

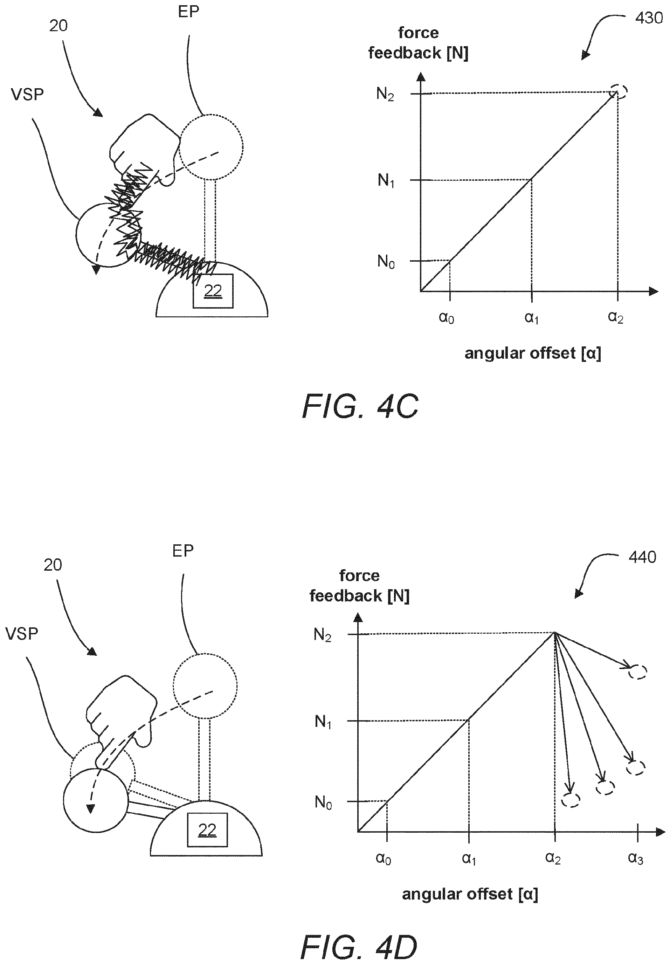

In **FIG. 4C** the joystick **24** has been further moved and reached the virtual stop position **VSP.** The subplot **430** shows this increase as the angular offset is at the offset value *α₂.* Here, the force feedback has reached the maximum force feedback value *N*₂*.* The operator now feels the strongest resistance, signaling that they have reached the virtual stop position **VSP.** The subplot **430** clearly marks this point as the peak of the force feedback curve, corresponding to the maximum force feedback value *N*₂*.*

**FIG. 4D** represents the scenario where the operator has decided to exert additional force, pushing the joystick **24** past the virtual stop position **VSP.** The virtual stop position **VSP** is thereby overridden. Consequently, the joystick **24** continues its movement away from the virtual stop position **VSP** (and the equilibrium position **EP),** potentially towards the mechanical end position **MEP,** although the **MEP** is not explicitly shown in this figure. The subplot **440** demonstrates several possible scenarios for how the force feedback might be reduced after overriding the virtual stop position **VSP.** It shows that the force feedback can drop to any value equal to or greater than *N₀*, with varying rates of reduction. Provided that the force feedback is noticeably, for the operator, lessened from the maximum *N₂*, the way this is done is not necessarily important. The tactile effect should be sufficient such that the operator feels that they have successfully overridden the virtual stop position **VSP.** As the joystick **24** moves further, the angular offset continues to increase, potentially reaching *α₃*, which can correspond to the maximum angular offset from the equilibrium position **EP.** This may be the mechanical end position **MEP.**

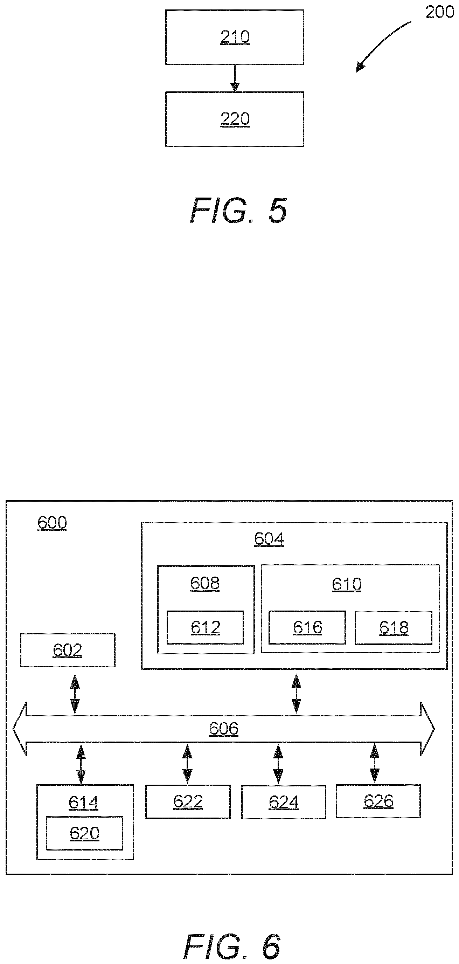

With further reference to **FIG. 5****,** a computer-implemented method **200** for force feedback control of an input device of a marine vessel is shown. The input device may be the input device **20** as discussed herein, and the marine vessel may be the marine vessel **10** as discussed herein. The method **200** comprises controlling **210** a force feedback unit to progressively increase a force feedback applied to the input device in response to a manual maneuvering of the input device towards a virtual stop position defined in between an equilibrium position and a mechanical end position of a movable range of the input device. The virtual stop position is a software-defined set point acting as an intermediate trigger for the input device. The force feedback is controlled to be progressively increased until it reaches a maximum force feedback value upon said input device being positioned at the virtual stop position. The method **200** further comprises controlling **220** the force feedback unit to reduce the force feedback applied to the input device at the virtual stop position in response to a force of a manual maneuvering of the input device exceeding the maximum force feedback value. The steps of the method **200** are performed by processing circuitry of a computer system.

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system 600 may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system (100; 600) for force feedback control of an input device (20) of a marine vessel (10), the computer system (100; 600) comprising processing circuitry (102; 602) configured to: control a force feedback unit (22) to progressively increase a force feedback applied to the input device (20) in response to a manual maneuvering of the input device (20) towards a virtual stop position (VSP), the virtual stop position (VSP) being defined in between an equilibrium position (EP) and a mechanical end position (MEP) of a movable range of the input device (20), wherein the virtual stop position (VSP) is a software-defined set point acting as an intermediate trigger for the input device (20), wherein the force feedback is controlled to be progressively increased until it reaches a maximum force feedback value upon said input device (20) being positioned at the virtual stop position (VSP); and control the force feedback unit (22) to reduce the force feedback applied to the input device (20) at the virtual stop position (VSP) in response to a force of a manual maneuvering of the input device (20) exceeding the maximum force feedback value.

Example 2: The computer system (100; 600) of Example 1, wherein the movable range of the input device (20) comprises a plurality of virtual stop positions (VSP-n), wherein the force feedback is controlled to be progressively increased until it reaches a maximum force feedback value upon said input device (20) being positioned at either one of the plurality of virtual stop positions (VSP-n), and wherein the force feedback is controlled to be reduced at said either one of the plurality of virtual stop positions (VSP-n) in response to a force of a manual maneuvering exceeding a maximum force feedback value.

Example 3: The computer system (100; 600) of Example 2, wherein the processing circuitry (102; 602) is configured to set the maximum force feedback value differently for each one of the plurality of virtual stop positions (VSP-n), wherein maximum force feedback values for virtual stop positions (VSP-n) closer to the mechanical end position (MEP) are set higher than virtual stop positions (VSP-n) closer to the equilibrium position (EP).

Example 4: The computer system (100; 600) of Example 2, wherein the processing circuitry (102; 602) is configured to set the maximum force feedback value approximately at the same value for each one of the plurality of virtual stop positions (VSP-n).

Example 5: The computer system (100; 600) of any preceding example, wherein the progressive increase of the force feedback comprises a plurality of step-wise increments applied at predefined positions in relation to a virtual stop position (VSP).

Example 6: The computer system (100; 600) of any of Examples 1-4, wherein the progressive increase of the force feedback comprises a linear function in relation to a displacement of the input device (20) with respect to a virtual stop position (VSP).

Example 7: The computer system (100; 600) of any of Examples 1-4, wherein the progressive increase of the force feedback comprises an integral function over time for which the input device (20) has been moved towards a virtual stop position (VSP).

Example 8: The computer system (100; 600) of any of Examples 1-4, wherein the progressive increase of the force feedback comprises an exponential function configured to exponentially increase the closer the input device (20) has been moved towards a virtual stop position (VSP).

Example 9: The computer system (100; 600) of any of Examples 1-4, wherein the progressive increase of the force feedback comprises a sigmoidal function, wherein a first portion of a movement range of the input device (20) towards a virtual stop position (VSP) involves a relatively higher force feedback, wherein a second portion following the first portion involves a relatively lower force feedback, and wherein a third portion following the second portion involves a relatively higher force feedback.

Example 10: The computer system (100; 600) of any of Examples 1-9, wherein the processing circuitry (102; 602) is configured to set a virtual stop position (VSP) as an angular or distance offset in relation to an angle or position of the mechanical end position (MEP) or the equilibrium position (EP).

Example 11: The computer system (100; 600) of any preceding example, wherein the processing circuitry (102; 602) is configured to set a maximum force feedback value based on one or more of ambient operating conditions, input device characteristics, vessel characteristics, operational modes, vessel operating conditions, operator preferences, surroundings data, IMU data, and safety and regulatory data.

Example 12: The computer system (100; 600) of any preceding example, wherein the processing circuitry (102; 602) is configured to cause emission of an audible alert in response to a force of a manual maneuvering exceeding a maximum force feedback value.

Example 13: The computer system (100; 600) of any preceding example, wherein the processing circuitry (102; 602) is configured to cause display of a visual indicator on a display unit of the marine vessel (10) in response to a force of a manual maneuvering exceeding a maximum force feedback value.

Example 14: The computer system (100; 600) of any preceding example, wherein the processing circuitry (102; 602) is configured to control a force attenuation unit to apply an attenuation force to the input device (20) in response to a force of a manual maneuvering of the input device (20) exceeding a maximum force feedback value.

Example 15: The computer system (100; 600) of Example 14, wherein the attenuation force is controlled to be relatively higher the closer to the mechanical end position (MEP) the input device (20) is positioned.

Example 16: The computer system (100; 600) of any preceding example, wherein the input device (20) comprises respective movable ranges in three degrees of freedom, wherein one or more virtual stop positions (VSP) are defined in each one of the respective movable ranges of the three degrees of freedom.

Example 17: The computer system (100; 600) of any preceding example, wherein the processing circuitry (102; 602) is configured to obtain positioning data of the input device (20) from a positioning sensor, wherein the force feedback control is based on the positioning data.

Example 19: The computer system (100; 600) of any preceding example, wherein the processing circuitry (102; 602) is configured to control the force feedback unit (22) comprising one or more of a spring and locking mechanism, a DC motor, and a magnetic field generator.

Example 20: A marine vessel (10) comprising the computer system (100; 600) according to any of Examples 1-19.

Example 21: A computer-implemented method (200) for force feedback control of an input device (20) of a marine vessel (10), comprising: controlling (210), by processing circuitry (102; 602) of a computer system (100; 600), a force feedback unit (22) to progressively increase a force feedback applied to the input device (20) in response to a manual maneuvering of the input device (20) towards a virtual stop position (VSP), the virtual stop position (VSP) being defined in between an equilibrium position (EP) and a mechanical end position (MEP) of a movable range of the input device (20), wherein the virtual stop position (VSP) is a software-defined set point acting as an intermediate trigger for the input device (20), wherein the force feedback is controlled to be progressively increased until it reaches a maximum force feedback value upon said input device (20) being positioned at the virtual stop position (VSP); and controlling (220), by the processing circuitry (102; 602), the force feedback unit (22) to reduce the force feedback applied to the input device (20) at the virtual stop position (VSP) in response to a force of a manual maneuvering of the input device (20) exceeding the maximum force feedback value.

Example 22: A computer program product comprising program code for performing, when executed by processing circuitry (602), the method of Example 21.

Example 23: A non-transitory computer-readable storage medium comprising instructions, which when executed by processing circuitry (602), cause the processing circuitry (602) to perform the method of Example 21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 600) for force feedback control of an input device (20) of a marine vessel (10), the computer system (100; 600) comprising processing circuitry (102; 602) configured to:
control a force feedback unit (22) to progressively increase a force feedback applied to the input device (20) in response to a manual maneuvering of the input device (20) towards a virtual stop position (VSP), the virtual stop position (VSP) being defined in between an equilibrium position (EP) and a mechanical end position (MEP) of a movable range of the input device (20), wherein the virtual stop position (VSP) is a software-defined set point acting as an intermediate trigger for the input device (20), wherein the force feedback is controlled to be progressively increased until it reaches a maximum force feedback value upon said input device (20) being positioned at the virtual stop position (VSP); and
control the force feedback unit (22) to reduce the force feedback applied to the input device (20) at the virtual stop position (VSP) in response to a force of a manual maneuvering of the input device (20) exceeding the maximum force feedback value.

2. The computer system (100; 600) of claim 1, wherein the movable range of the input device (20) comprises a plurality of virtual stop positions (VSP-n),
wherein the force feedback is controlled to be progressively increased until it reaches a maximum force feedback value upon said input device (20) being positioned at either one of the plurality of virtual stop positions (VSP-n), and
wherein the force feedback is controlled to be reduced at said either one of the plurality of virtual stop positions (VSP-n) in response to a force of a manual maneuvering exceeding a maximum force feedback value.

3. The computer system (100; 600) of claim 2, wherein the processing circuitry (102; 602) is configured to set the maximum force feedback value differently for each one of the plurality of virtual stop positions (VSP-n), wherein maximum force feedback values for virtual stop positions (VSP-n) closer to the mechanical end position (MEP) are set higher than virtual stop positions (VSP-n) closer to the equilibrium position (EP).

4. The computer system (100; 600) of claim 2, wherein the processing circuitry (102; 602) is configured to set the maximum force feedback value approximately at the same value for each one of the plurality of virtual stop positions (VSP-n).

5. The computer system (100; 600) of any of claims 1-4, wherein the progressive increase of the force feedback comprises a linear function in relation to a displacement of the input device (20) with respect to a virtual stop position (VSP).

6. The computer system (100; 600) of any of claims 1-4, wherein the progressive increase of the force feedback comprises an exponential function configured to exponentially increase the closer the input device (20) has been moved towards a virtual stop position (VSP).

7. The computer system (100; 600) of any preceding claim, wherein the processing circuitry (102; 602) is configured to set a virtual stop position (VSP) as an angular or distance offset in relation to an angle or position of the mechanical end position (MEP) or the equilibrium position (EP).

8. The computer system (100; 600) of any preceding claim, wherein the processing circuitry (102; 602) is configured to set a maximum force feedback value based on one or more of ambient operating conditions, input device characteristics, vessel characteristics, operational modes, vessel operating conditions, operator preferences, surroundings data, IMU data, and safety and regulatory data.

9. The computer system (100; 600) of any preceding claim, wherein the processing circuitry (102; 602) is configured to:
cause emission of an audible alert, and/or
cause display of a visual indicator on a display unit of the marine vessel (10),
in response to a force of a manual maneuvering exceeding a maximum force feedback value.

10. The computer system (100; 600) of any preceding claim, wherein the processing circuitry (102; 602) is configured to control a force attenuation unit to apply an attenuation force to the input device (20) in response to a force of a manual maneuvering of the input device (20) exceeding a maximum force feedback value.

11. The computer system (100; 600) of any preceding claim, wherein the input device (20) comprises respective movable ranges in three degrees of freedom, wherein one or more virtual stop positions (VSP) are defined in each one of the respective movable ranges of the three degrees of freedom.

12. A marine vessel (10) comprising the computer system (100; 600) according to any of claims 1-11.

13. A computer-implemented method (200) for force feedback control of an input device (20) of a marine vessel (10), comprising:
controlling (210), by processing circuitry (102; 602) of a computer system (100; 600), a force feedback unit (22) to progressively increase a force feedback applied to the input device (20) in response to a manual maneuvering of the input device (20) towards a virtual stop position (VSP), the virtual stop position (VSP) being defined in between an equilibrium position (EP) and a mechanical end position (MEP) of a movable range of the input device (20), wherein the virtual stop position (VSP) is a software-defined set point acting as an intermediate trigger for the input device (20), wherein the force feedback is controlled to be progressively increased until it reaches a maximum force feedback value upon said input device (20) being positioned at the virtual stop position (VSP); and
controlling (220), by the processing circuitry (102; 602), the force feedback unit (22) to reduce the force feedback applied to the input device (20) at the virtual stop position (VSP) in response to a force of a manual maneuvering of the input device (20) exceeding the maximum force feedback value.

14. A computer program product comprising program code for performing, when executed by processing circuitry (102; 602), the method of claim 13.

15. A non-transitory computer-readable storage medium comprising instructions, which when executed by processing circuitry (102; 602), cause the processing circuitry (102; 602) to perform the method of claim 13.
